Europäisches Patentamt

(19) European Patent Office

Office européen des brevets

(11) Publication number: **0 038 371**

A2

(12) **EUROPEAN PATENT APPLICATION**

(21) Application number: **80102134.6**

(22) Date of filing: **21.04.80**

(51) Int. Cl.³: **B 29 C 17/03**

(43) Date of publication of application:
**28.10.81** Bulletin **81/43**

(84) Designated Contracting States:
**AT BE DE FR GB NL SE**

(71) Applicant: **Plastona (John Waddington) Limited**
**Wakefield Road**
**Leeds LS10 3TP(GB)**

(72) Inventor: **Taylor, Edward Harold**
**c/o Plastona (John Waddington) Ltd Wakefield Road**
**Leeds LS10 3TP(GB)**

(74) Representative: **Denmark, James**
**c/o Bailey Walsh & Co. 5 York Place**
**Leeds LS1 2SD Yorkshire(GB)**

(54) **Method of producing thermoformed beverage containers and containers produced by this.**

(57) A method of forming plastics containers in quantity from plastics sheet, said containers being provided with top flanges by which the container tops maybe rim rolled sealed by metal lids. The plastics materials sheet is hot and annular regions are chilled to remove heat therefrom and leave hot circular regions which are formed into the individual containers. The chilling of the annular regions outwardly of where the cuts are made in the material to remove the thermoformed containers ensures that in the said top flanges the plastics material will be thinned down and radially orientated which inhibits cracking of the plastics material during seaming with the metal lids. The containers are specifically designed for holding carbonated beverage and specifically a plastics material is a polyester material, especially polyethylene terephthalate of high molecular weight.

EP 0 038 371 A2

Croydon Printing Company Ltd.

## FIELD OF THE INVENTION

This invention relates to containers which are for holding carbonated beverages. The invention also relates to said containers when filled with carbonated beverage and sealed. The containers to which the invention relates are those for holding small quantities of beverage for individual consumption, as opposed to bulk containers or storage tanks for holding large quantities of beverage subsequently to be dispensed in or divided into quantities for individual consumption.

## DISCUSSION OF PRIOR ART

Large quantities of carbonated beverages, such as beer and soft drinks, are sold in containers throughout the world, and traditionally, such containers have been of glass because it is strong, and has good gas barrier properties which prevent loss of carbonation of the drink before opening of the container. The trouble with glass is of course that is breaks easily, it is not easy to dispose of, and glass containers are space consuming. Moreover, in the hands of hooligans, empty glass containers become lethal throwing weapons.

Because of the problems associated with the use of glass, there have been developed metal containers, or cannisters, for holding carbonated beverges, such cannisters comprising essentially a metal sleeve with metal ends sealingly crimped thereto, one of such ends having an easy opening device whereby access to the cannister contents may be 30achieved Such containers have had considerable . success to such an extent that approximately equal numbers of metal cannisters and glass containers are now in use today throughout the world.

These metal cannisters have disadvantages; for example they can also be used as throwing weapons in the hands of unthinking people, they are difficult to dispense of, and they are expensive.

A further type of known container which is used for containing carbonated beverage is a plastic container which is blow moulded. This container is less dangerous when used as a throwing weapon, but it must be made relatively thick and is expensive to produce, as it requires the provision of expensive machinery, and only a relatively slow rate of production of such containers is possible.

We have been of the view, since as long ago as 1969, that it would be desireable to provide a container for carbonated beverage which is thermoformed by conventional techniques from extruded sheet plastics material.

The advantages of such a container are in our view considerable. Firstly, the container will be of relatively thin material (comparable with the metal sleeve of the metal cannister), which in turn will make it easier to dispose of and will make it less dangerous, in the hands of hooligans, as it will be light in weight when empty, and secondly, it will be capable of being produced inexpensively and quickly.

We have continuously worked to achieve the production of a plastic container which is for holding carbonated beverage and which is thermoformed from extruded sheet material for the last eight years and we have obtained the grant of a number of British Patents and have other applications pending with this objective in view. In prosecuting these patents and applications, and equivalent patents and/or applications in other countries, we are aware that a number of other parties throughout the world are also seeking to achieve the production of a satisfactory container as outlined above, but at the present time to our knowledge a commerically satisfactory product usable on a large scale has not resulted.

In our earlier attempts to produce a thermoformed plastics material container from extruded plastics sheet, a laminate of polystyrene sheet and a layer of high barrier acrylonitrile polymer were thermoformed in to the container shape by conventional thermoforming techniques. After formation, the container was sealed using a metal end having an easy opening device, the metal end being crimped to a top peripheral flange of the plastics material container.

Tests on containers manufactured as indicated above, then filled with carbonated beverage, and then sealed as indicated above, revealed a technical problem, that some of the containers developed hair-line fractures in the top region as a result of the sealing operation, indicating, in said top region of the container, a lack of strength of the plastics material used for the containers, in particular the polystyrene. Secondly, with the passage of time, there was a loss of carbonation in the beverage in the case of some of the containers and this was traced to be due to imperfections in the barex layer which were not or scarcely detectable with the naked eye. The latter problems may have been soluble by the obvious method of increasing the thickness of both the barex layer and the high impact polystyrene, but increasing of thickness of the layers mitigates against effectively crimping the top rim of the container with a metal closure, and against producing a satisfactory thermoplastics container at a reasonable cost.

Containers comprising high barrier acrylonitrile polymer (barex) created problems because barex "creeps" under load, and accordingly the barex containers which were filled and sealed, with the passage of time, tended to swell in the wall region to an unacceptable extent and/or evert in the base region to such an extent as to make them "rockers" which containers, although able to stand freely, tend to rock between different equilibrium positions if displaced, or indeed the containers became incapable of standing freely.

Also, some of the containers cracked or developed hair-line fractures at the top during the sealing stage, and the burst strength of the containers was not high enough in that some of the containers burst under pressure as low as 55 p.s.i. We were aware that the burst problem could be cured by thickening the container, but this would have aggravated the problem of cracking during seaming with the metal lid because during the seaming process the container flange and the flange of the lid are rim rolled, and the container must be of sufficient flexibility to rim roll without cracking.

We experimented with two other forms of high acrylonitrile polymers, namely the material sold under the names Cycopac 920 and Cycopac 930 made by Borg Warner, but these materials proved themselves to be worse from the point of view of cracking during sealing than the barex, and like the barex containers they had to be held in metal jigs during pasteurisation.

We used a material which is not conventionally thermoformed from extruded sheet, for some further experimental containers, and the material in question was polyester. We were aware that polyester had been used as film for flexible packages and upon testing its fitness as regards providing a gas barrier for gas retention, initial tests were encouraging. We carried out tests with the two main polyester materials namely Polyethylene Terephthalate and Polybutylene Terephthalate. Polyethylene Terephthalate showed itself to have better gas barrier properties, and we experiemented with a number of commerically available grades of polyester, not in themselves sold as materials for extruding into sheet, and in general encouraging results were obtained, but the problem of providing an effective seal between the rim rolled lid and container top still to some extent remained.

The problem of preventing cracks from arising at the top of the containers as a result of the rim rolling of the container tops with the metal lids was still the major difficulty.

Keith R. Woodley has already directed himself to this problem in his U.S. Patent No. 4,102,467. Woodley's opinion is that critical shaping of the container flange is necessary, if an effective seam between metal lid and container flange is to be provided. Woodley's solution is to provide a seam forming portion carrier on the side wall of the container which is radially offset from the next adjacent portion of said wall and also to provide an intermediate radius having a generally flat inner end supporting surface generally perpendicular to the axis of the container body and interconnecting said side wall and said upper seam forming portion, and also to provide a radially outwardly directed flange carried upon said seam forming portion and gradually tapering from a thickness substantially equal to the thickness of the upstanding side wall to a thickness generally one-half that of said upstanding wall at its outer end, said flange being connected to said upper seam forming portion through another shoulder section of uniform thickness and having a radius of curvature substantially less than said wall thickness. Woodley's patent was issued as recently as July 25th, 1978, and it is therefore apparent that persons skilled in the art are still directing themselves to this problem. Woodley points out that his invention can apply to thermoformed or injection moulded plastic containers, but in the instant invention, we are concerned only with thermoformed containers.

Again, in U.S. Patent No. 3,685,685, James A. Phillips directs himself to the problem of seaming metal lids to plastic containers in such a fashion that an effective seal is formed. Phillips draws attention to the problem at column 1 lines 20 to 40, and quite correctly identifies that many problems have arisen in connection with the seaming of metal lids to plastics material containers. Phillips' solution is to double seam the lid and container flange and to provide that the plastic of the double seam should be compressed to a thickness which is less than half of the original thickness before seaming; also Phillips specifies that the plastics material should have modulus of elasticity between about $0.10 \times 10^6$ and about $0.40 \times 10^6$ p.s.i.

## SUMMARY OF THE INVENTION

The present invention which is concerned with the simultaneous production of multiple containers, relies for its effectiveness as regards the capability of the containers to be rim rolled with a metal lid, or the design and manufacture of the container top region which we have found is critical to ensure the effective seaming to said top region of a metal end by rim rolling.

According to the present invention there is provided a method of producing a plurality of thermoformed, circular sectioned and flanged top containers, from thermoformable polyester plastics material in sheet form which is sufficiently hot to be thermoformed by moulding in a moulding apparatus having a plurality of circular sectioned, mould cavities, wherein:

a) the heat is removed from the plastics sheet material in a plurality of annular regions to such an extent to freeze the said annular regions to a temperature below the thermoforming temperature, leaving discrete circular regions of hot plastics material to be thermoformed into individual containers;

b) locating said circular regions in register with said circular sectioned cavities and thermoforming the containers in said cavities and the flanges at the top edges of the cavities from said circular regions;
c) locating the edges of said circular regions spaced
from the top edges of the said cavities to ensure that in
the vicinity of said top edges, the plastics sheet
material which forms said flanges is radially orientated
and reduced in thickness as the said regions are
thermoformed to define the containers and flanges;and
d) severing the containers from the remainder of the
sheet along circular cut lines defining the edges of
said flanges.

The sheet material may be frozen by being clamped by
relatively cold dies at a position radially spaced, or
radially and axially spaced from said flanges and the
stretching of the material defining the flanges may be
such that the material of the flange is of the order of
0.3 - 0.4 of the thickness of the starting material as
well as being orientated only radially.  It is this
induced radial orientation of the rim which enhances the
rim rolling of the plastics material with the metal cap or
lid and minimises splitting of the plastic material at the
region of the rim rolling.

In the preferred case, the material used for the continers
is high viscosity high molecular weight polyethylene
terepthalate material having an average molecular weight
in the range 24,000 to 42,500 inclusive.

It is interesting to note that in the U.S. Patent
3,685,685 discussed above, Phillips rejects the use of
polyester material because it has a modulus of elasticity
which is higher than his specified modulus of elasticity
range, expressing the view that materials which have a
modulus of elasticity lying above the range are too hard
and brittle to be effectively double seam sealed in
combination with a metal cover, which of course is an
opposite standpoint from the present invention.

Analysis and examination of the various materials tested showed that the material which was eminently suitable for use in containers for carbonated beverage thermoformed from sheet material, was a high viscosity, high molecular weight polyethylene terepthalate of molecular weight in the range 24,000 tto 42,500 Mn which has the following advantages:-

a)    it can be extruded satisfactorily

b)    it can be thermoformed satisfactorily

c)    it can, when formed according to the invention, be rim rolled or seamed with a metal lid with minimum or no hair-line cracks occurring

d)    it has only a small degree of creep, if any, after filling with the carbonated beverage and sealing

e)    it has good gas barrier properties

f)    it has good strength properties to resist bursting.

The aforesaid advantages are achieved using a material of thickness comparable with that used for thermoformed containers of conventionally used materials

Containers produced by the method are extremely suitable for containing carbonated beverages which do not require to be pasteurised, but even considering containers of said material which are filled and sealed, and subsequently pasteurised, the heat resistance of the thermoformed containers may be increased by partially crystallising the polyester, which is relatively amorphous, by thermoforming the relatively amorphous sheet in a tool heated by oil or similar means to a temperature between $140^{\circ}$C to higher than $180^{\circ}$C. The distortion temperature of the containers produced in this way is increased from about $75^{\circ}$C to higher than $200^{\circ}$C giving rise to the possibility of pasteurising and sterilising liquids within the crystallised containers.

The said freezing of the plastics web may be achieved by passing coolant through the relevant parts of the tool so that, in accordance with the invention, the sheet where it is clamped will be chilled and such material will not extend during the deep drawing process, ensuring that the container flanges thin down to the desired amount.

Preferably, the container is generally frusto-conical and has a top diameter to depth ratio in the range of 4:4 to 4:8 inclusive.

Additionally, the container may have a de-nesting ring formed at the top end thereof, the de-nesting ring being of such a height related to the half cone angle of the container and the thickness of the material, so that the containers can be nested one within another before being filled, and can be separated mechanically and accurately.

In the thermoforming of the containers, the sheet material preferably is' clamped, and therefore frozen in the annular regions surrounding and concentric with the mould cavities, and substantially co-planar with the flanges of the container, said annular regions having an inner diameter which is at least 1.2 times the top diameter of the mould cavity and preferably is in the range of 1.5 to 1.8 times said top diameter of the mould cavity. By so freezing the annular regions of the material, the said flanges are formed at the top of the containers between the top of the mould cavity and the frozen region. Such flanges, which will be radially orientated, form the means whereby the metal caps are rim rolled to the container tops.

In an alternative arrangement, the sheet material may be clamped and frozen at annular regions which are radially close to so as to be substantially the same diameter as the flanges, but which are spaced from the flanges axially so that the material in forming to the mould cavities will stretch axially and then will be formed into the shoulders of the moulds defined by the radial portions which will define the flanges and axial portions extending between said radial portions and where the material is frozen.

Creep tests with containers produced in accordance with the invention, sealed with metal lids and containing carbonated orange drink of carbonation 2.5 volumes stored at a temperature of $30^{\circ}C$ have shown that the containers did not creep objectionably over a period of at least two months. Similar tests at $35^{\circ}C$ have shown that there will be no objectionable creep over a period of 48 hours. As regards burst strength capability, increasing the internal pressure by injecting air under pressure at ambient temperature has shown that said sealed containers can withstand a temperature of 110-120 p.s.i. before bursting and the lid blows off rather than the container rupturing.

Because of the advantage outlined above that the containers do not fracture in the sealing operation, a wider tolerance can be allowed for in terms of the thickness variation of the flange at the top of the container which is rim rolled with the metal lid. Because of the fact that the material creeps less, the design of the base may be simplified.

By way of example, there is shown in the accompanying drawings a container produced by a method according to the invention. It is to be mentioned that the container is constructed from high viscosity high molecular weight polyester, and in this example the material of the container is preferably polyethylene terephthalate, but other polyester plastics sheet materials can be used. The drawings illustrate one constructional form of container suitable for holding carbonated beverage, especially a carbonated beverage such as a soft drink which does not require to be pasteurised. The drawings also show two methods of producing containers according to two embodiments of the invention.

BRIEF DESCRIPTION OF THE DRAWINGS

In the drawings:-

Fig. 1 is a side elevation of a container thermoformed from extruded plastics sheet material of the nature described above;

Fig. 2 is a perspective view of the container shown in Fig. 1, from the underneath;

Fig. 3 is a plan view of the container shown in Figs. 1 and 2;

Fig. 4 is a sectional elevation, the section being taken on line A-A in Fig. 3 of the base and top of the container shown in Fig. 1, 2 and 3, and is shown to an enlarged scale;

Figs 5, 6 and 7 are views similar to Figs, 1, 2 and 3 of the container shown in Figs 1, 2 and 3 after the top is sealed by means of a metal lid;

Figs. 8 and 9 respectively show two different stages in the process of attachment of the metal lid to the container top edge;

Figs. 10, 11, 12 and 13 show in sectional elevation, the formation of a container in accordance with a first embodiment of the present invention;

Figs. 14, 15, 16 and 17 respectively are views similar to Figs. 10 to 13, but show the formation of a container in accordance with another embodiment of the present invention;

Fig. 18 is a diagrammatic sectional elevation, showing upper and lower mould parts for forming a plurality of containers and for effecting the clamping shown in Figs. 10 to 13, and Fig. 19 is a plan view of the lower mould part shown in Fig. 18, and the view shows also the skeletal clamping region.

Referring to the drawings, the container shown in Figs.

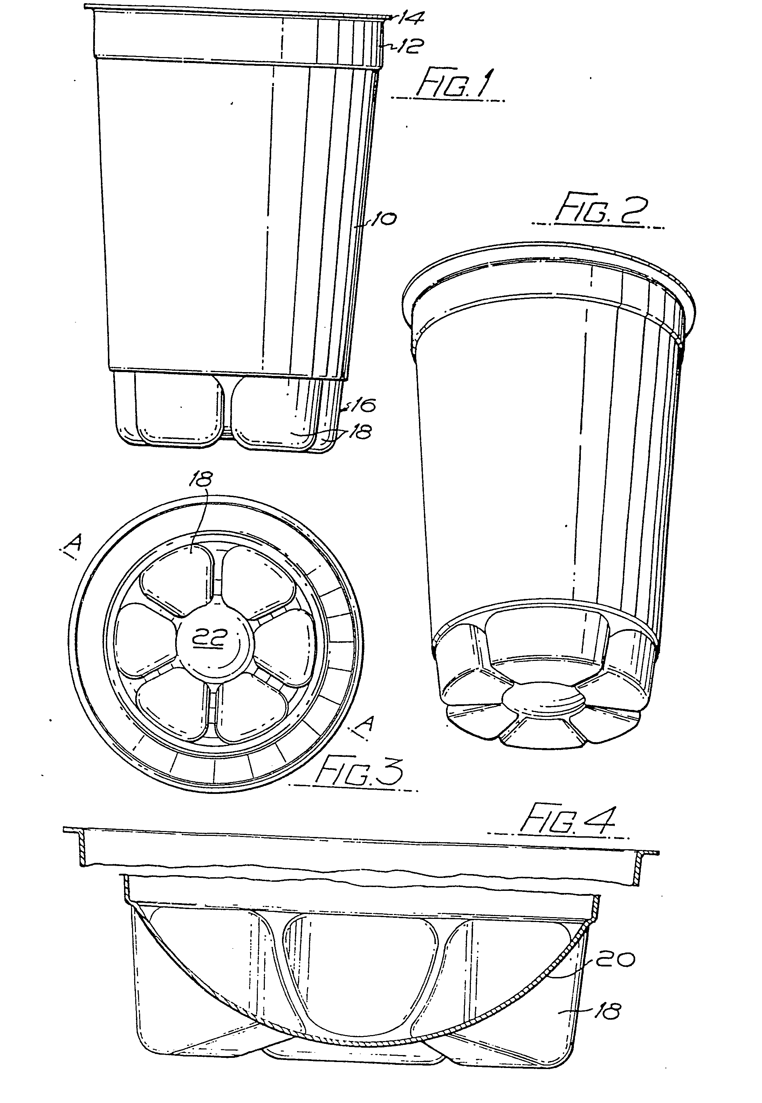

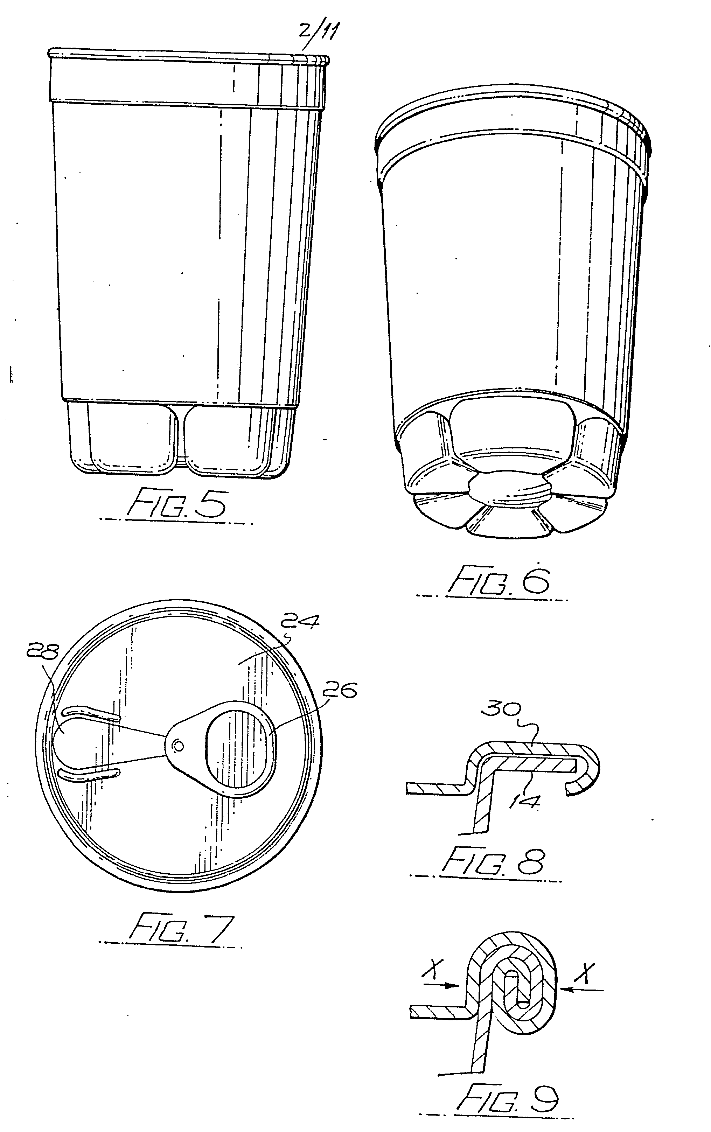

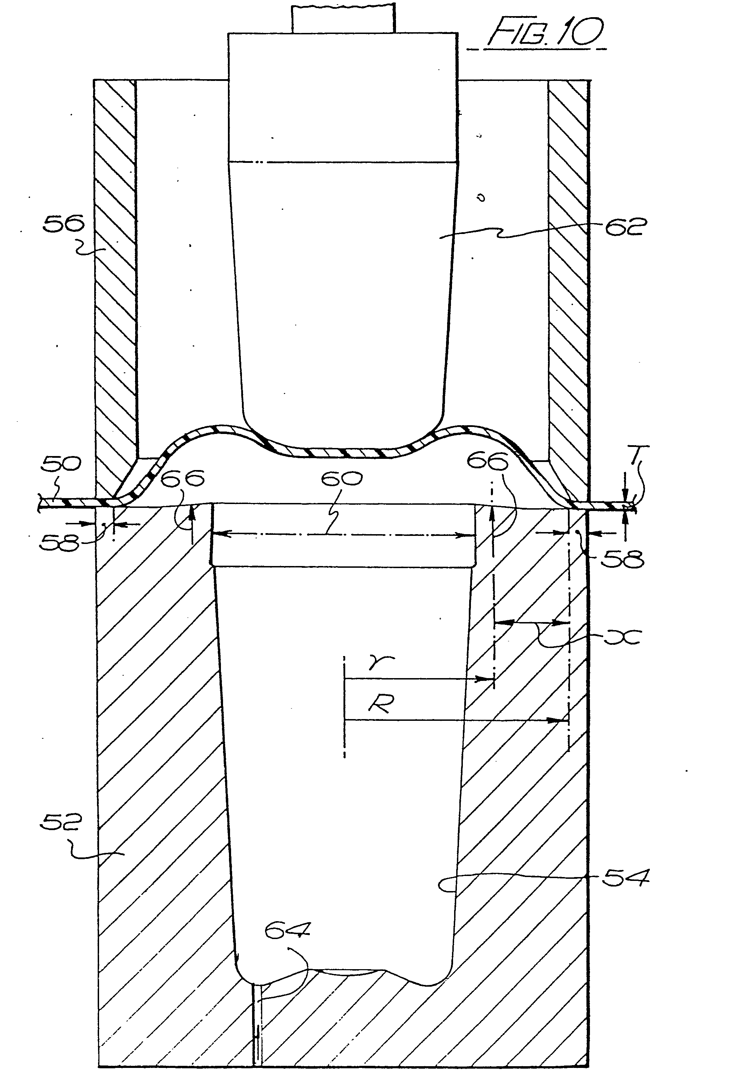

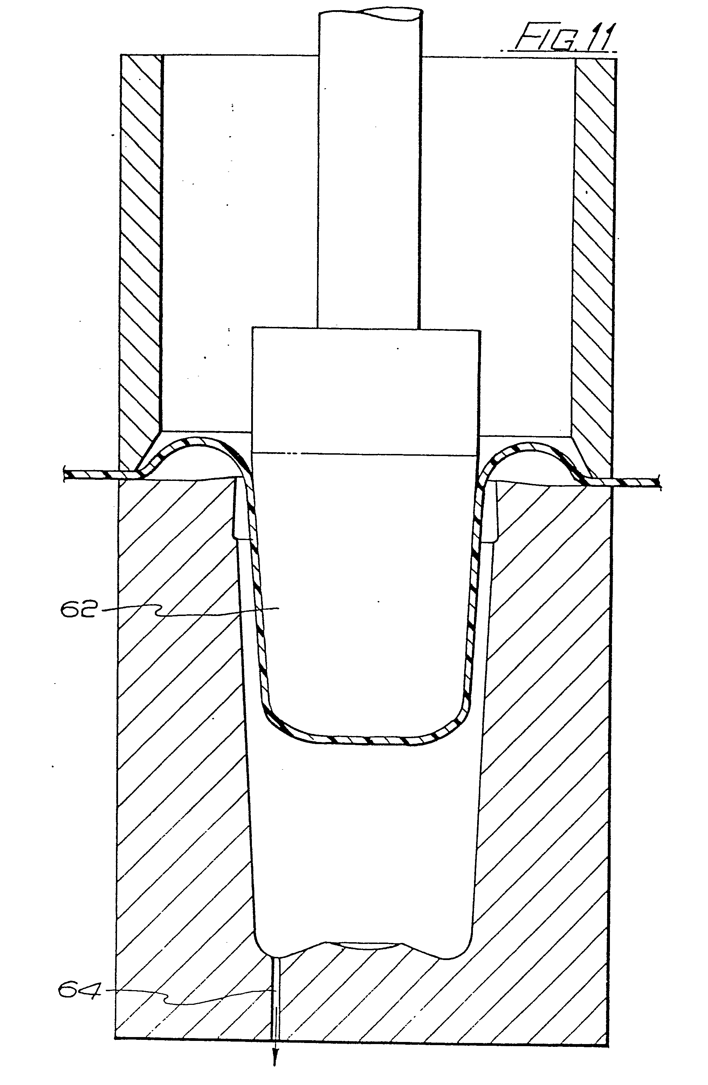

1, 2 and 3 is thermoformed from extruded sheet material of Polyethylene Terephthalate. For example, the container may be formed by deep drawing, by air pressure moulding, or a combination of these techniques with or without plug assist. The container comprises essentially a frusto-conical wall 10 having at the top thereof a de- nesting ring 12 and at the top extremity an attachment flange 14 which is outwardly turned and the formation of which is of importance in the present invention. The base region 16 of the container is formed so as to have six downwardly extending feet 18 which are petal shaped as shown in the plan view of Fig. 3, and as shown in Fig. 4 these feet 18 essentially project from a part spherical base 20. The feet 18 can either be considered as projecting from the portion 20, or the feet 18 can be considered as separated by curved straps leading to a central region 22. The construction illustrated is designed to resist eversion of the base to such an extent that the region 22 projects downwardly further than the areas of the feet 18 on which the container is adapted to stand. The base can of course be constructed in any other manner with this objective in view, but it is desirable that the base has certain design characteristics from the strength point of view, because the container is specifically for holding carbonated beverage and will be subjected to an internal pressure in use before the contents of the container are consumed.

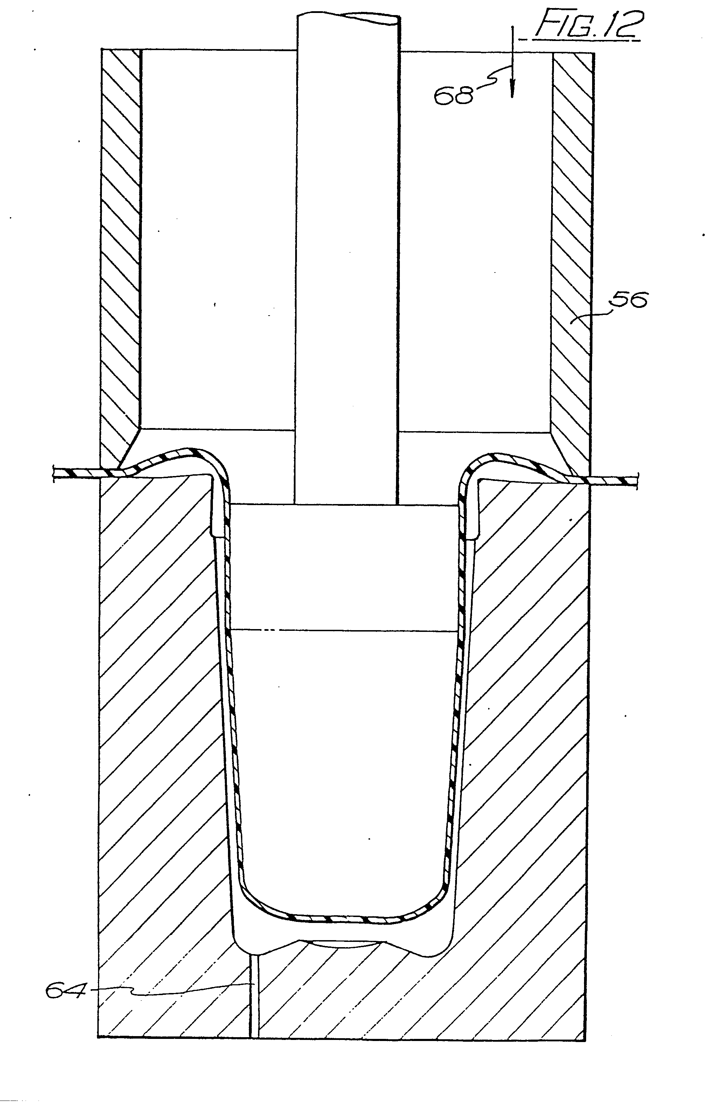

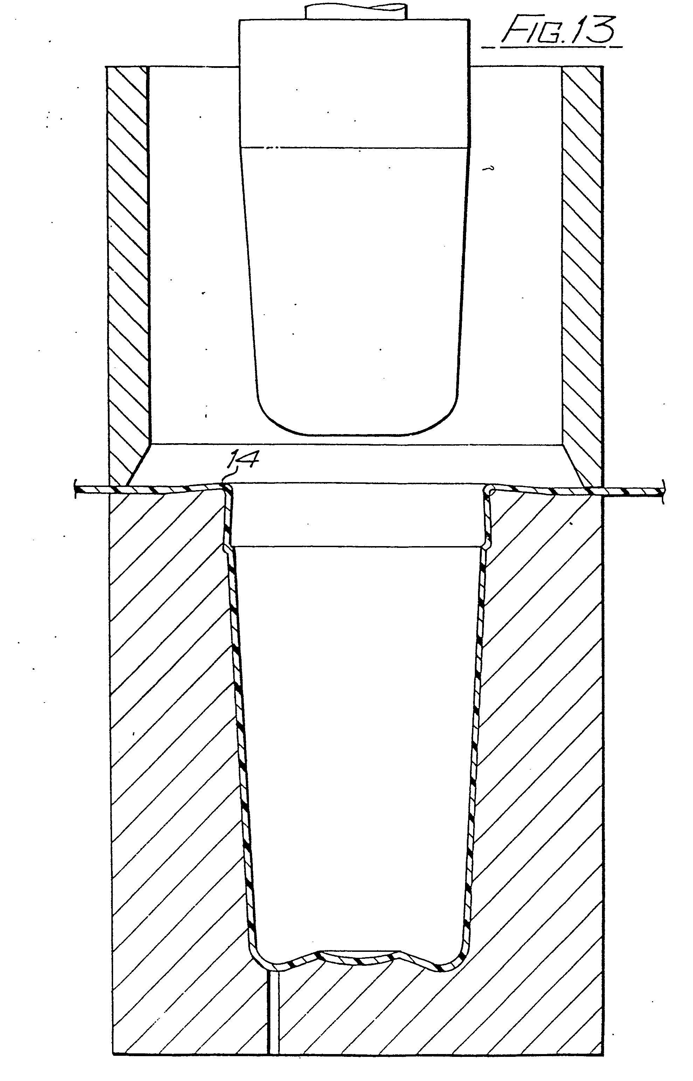

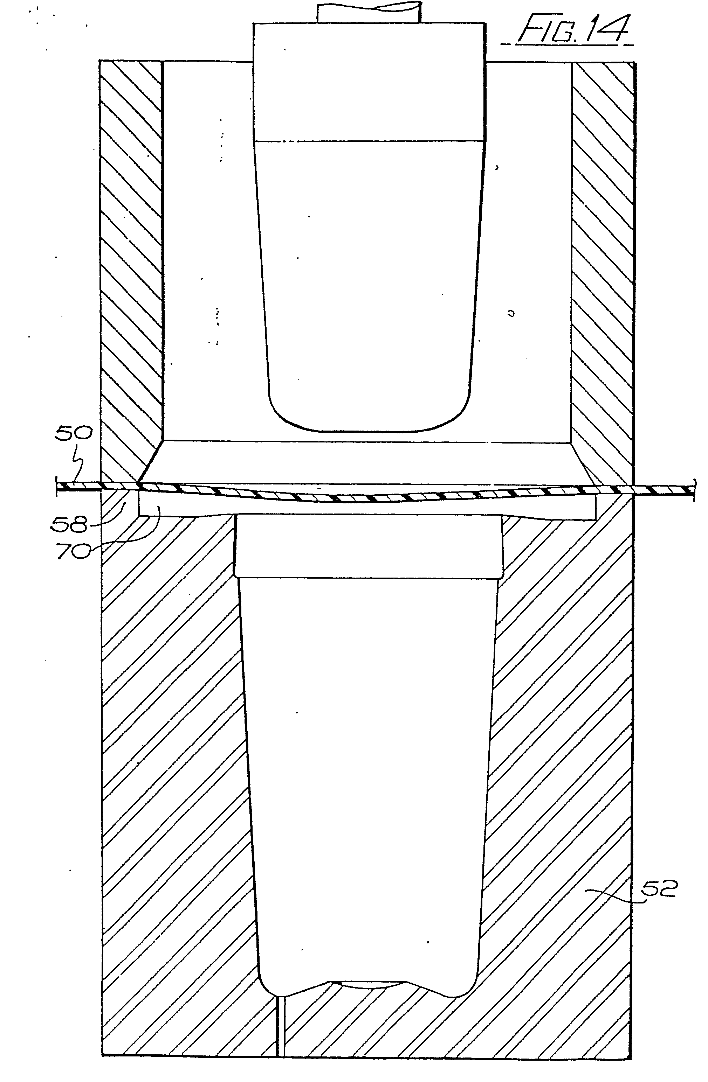

Figs. 5, 6 and 7 show the container of Figs. 1, 2 and 3 after sealing of the top thereof by means of a metal lid 24 of conventional construction and having a conventionally arranged ring pull device 26, the pulling of which removes the pear shaped portion 28 and permits access to the container interior. Such metal lids 24 with devices 26 and 28 are well known.

It will be appreciated of course that the container is filled with the carbonated beverage before the lid 24 is applied to the top of the container. Conventionally, when such beverages are charged into containers, they are in chilled condition, and sealing takes place as soon as possible after filling in order to maintain the carbonating gas in solution; after filling, the contents will increase in temperature to ambient with a consequent increase in the internal pressure. The level of this internal pressure will depend upon the temperature of the environment in which the package is located, but for the United Kingdom, the containers should be capable of withstanding a pressure up to 110/120 p.s.i. We have achieved satisfactory results using containers of the polyester material described of a thickness of 0.055", filled with carbonated orange drink carbonation of 2.5 volumes and sealed with a metal lid. Moreover, such containers have good gas barrier properties to such extent that little carbonation was lost over a 6 months storage period.

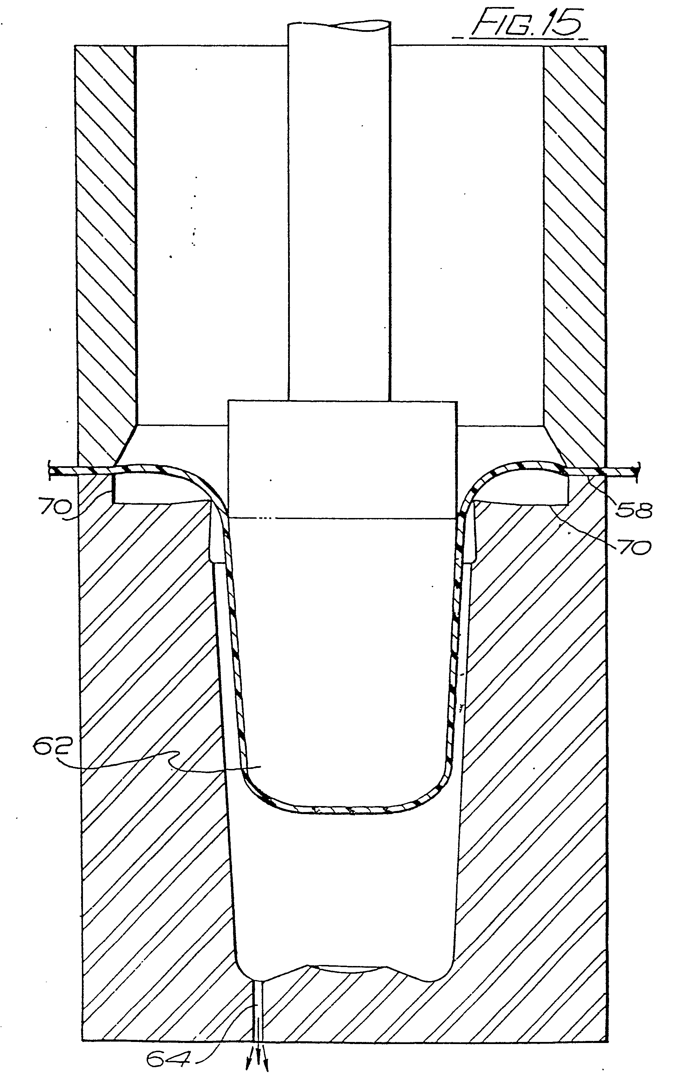

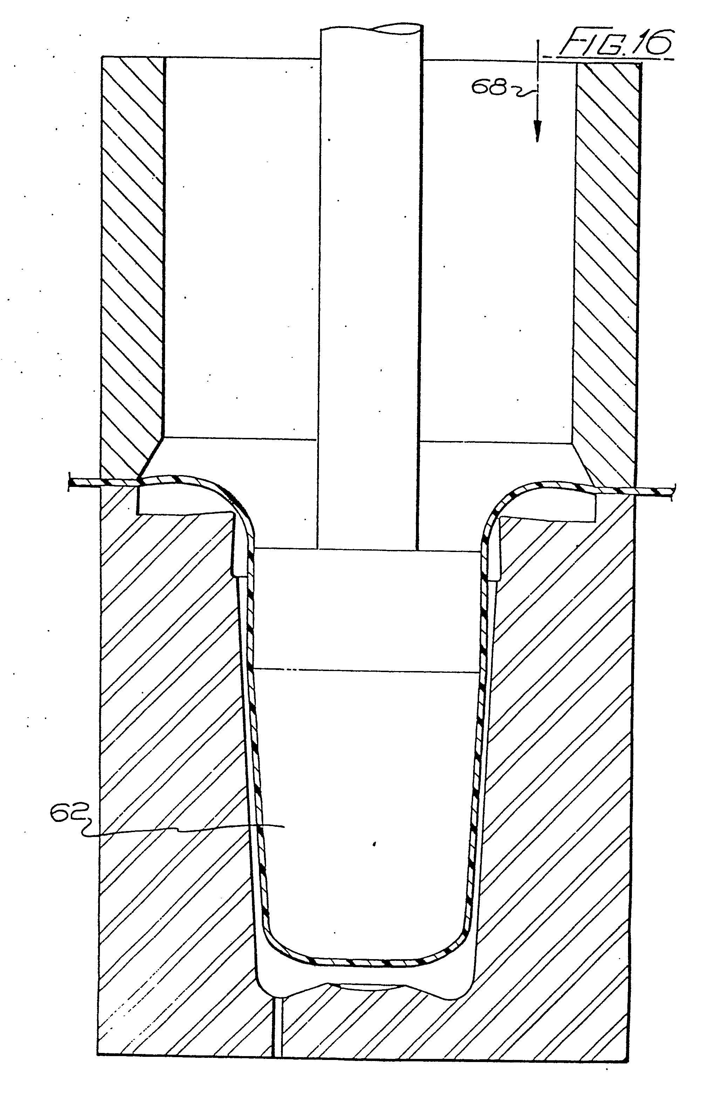

The metal lid 24 has a flange 30 as shown in Fig. 8 when it is formed, and the flange 30 is rim rolled with the flange 14 from the position shown in Fig. 8, to the position shown in Fig. 9 in order to complete the seal between the metal lid and the container. The flange 30 is shown in Fig. 8 as contacting the flange 14 directly but it may be desirable to put a sealing washer between the two flanges before they are rim rolled together, and it may also be desirable to pinch the rolled flanges by suitable means as indicated by the arrows X in Fig. 9.

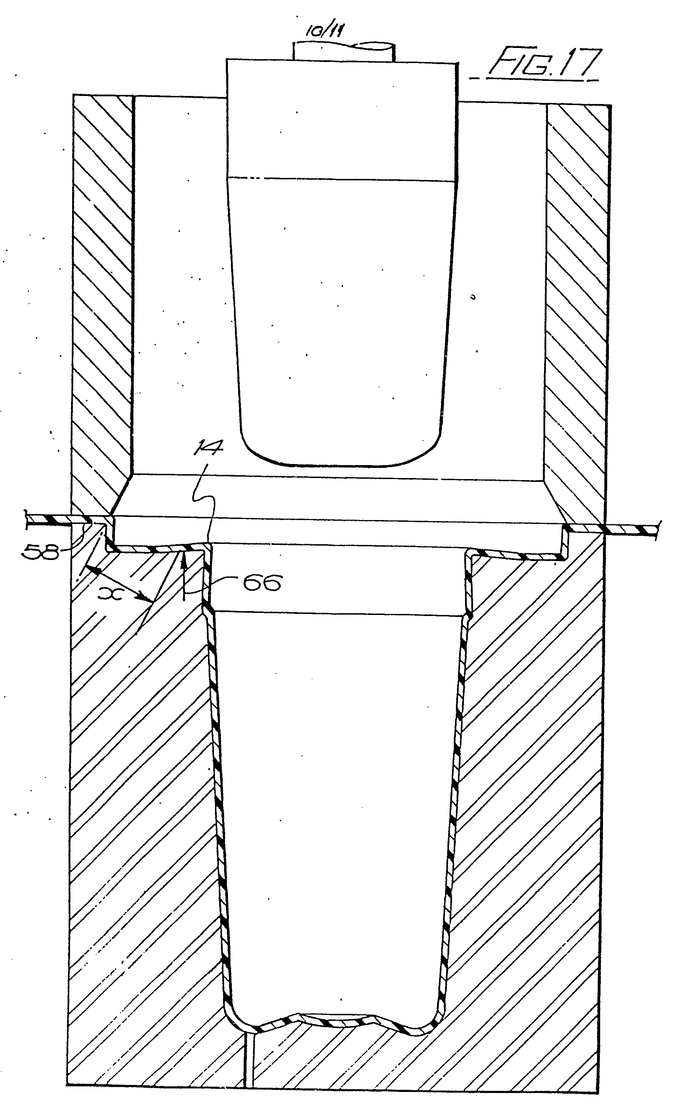

Referring to Figs. 10 to 17, these Figs. show two embodiments of methods of the invention for the mono-axial orientation of the container flange, whilst Figs. 18 and 19 illustrate complimentary upper and lower mould parts for use in forming a plurality of containers simultaneously.

Referring to Figs. 18 and 19, Fig. 18 shows diagrammatically upper and lower mould parts 100 and 102, the lower part being a plate of which the top face has an array (in this case 20) circular sectioned mould cavities 104 therein. The lower face of the upper plate 100 has a series of cut-outs so that a skeletal clamping region 106 (whose area is indicated by cross-hatching lines in Fig. 19) is defined by said lower face. The said cut-outs are in the same array as the cavities 104. The thermoplastics sheet to be formed is in continuous web form in this example (it may alternatively be in individual sheets) and is shown in Fig. 18 as being between the mould parts 100, 102, said parts being spaced. The plastics material has previously been heated to thermoforming temperature. The plastics web may be fed from a reel of such material, the heat being applied between the reel and the moulding machine, or hot extruded web may be fed directly from the extruding machine to the moulding machine. In the next stage of operation, the parts 100, 102 are brought together so that the sheet is clamped in the skeletal region 106. This clamping has the effect of "freezing" the sheet in this region to below the thermoforming temperature as the mould part 100 is cold relative to the hot sheet and the sheet becomes in effect locally rigid, the circular, discrete portions 108 remaining hot and deformable, as well as being in register with the cavities 104. The dotted lines 110 indicated in Fig. 19 are the cut lines, being the lines along which the containers are cut from the remainder of the sheet, as will be explained hereinafter.

In the example illustrated in Fig. 18, the upper plate has inlet and outlet pipes 112, 114. The lower plate 102 may also be cooled in a similar fashion, and reference numerals 116 and 118 illustrate corresponding inlet and outlet cooling pipes. The upper plate 100 is also provided with thermoforming assist plugs, but these are not shown in Fig. 18 in the interests of clarity. A plug is described, when the detailed thermoforming of a single container is considered in relation to Figs. 10 to 17.

In an alternative arrangement the containers may be formed sequentially by means of a rotary moulding wheel having the cavities arranged peripherally. The hot plastics sheet is fed tangentially to the said wheel for the sequential moulding of the containers.

Referring now to Figs. 10 to 17, in these figures, the thermoforming of a single container is described and illustrated, but it is to be remembered that the invention provides for the formation of a plurality of containers, (20 in the case of Fig. 18) and each is formed in a fashion similar to that illustrated in Figs. 10 - 13 or Figs. 14-17 as the case may be.

Dealing firstly with Figs. 10 to 13, reference numeral 50 indicates the heated polyester sheet material, whilst numeral 52 indicates a mould (part of plate 102 - Fig. 18) for thermoforming the sheet material 50, the mould cavity being (one of cavities 104 - Fig. 18) indicated by numeral 54. A clamping ring 56 (part of plate 100 - Fig. 18) co-operates with the mould 52 as shown to clamp the material 50 in the annular region 58, the inner diameter of which is substantially greater than the diameter 60. Located centrally of the assembly and above the cavity 54 is an assisting plug 62, and finally an air passage 64 connects the cavity 54 sequentially with a source of compressed air or a vacuum source. The arrows 66 indicate the marginal region (lines 110 - Fig. 19) of the container flange 14, as referred to in the previous figures, which is to be seamed with the metal lid 24.

The present invention seeks to ensure that the said flange 14, between its outer extremity 66 and the inner edge defined by top mould diameter 60, will be mono-axially orientated in the finished container. The method illustrated in Figs. 10 to 13 operates as follows. Firstly, the material is clamped in the annular region 58 (part of region 106 - Fig. 19) by the clamping ring 56 and the mould 52, and it should be mentioned that this clamping has the effect of cooling the material which is clamped to a rigid state and in this region there will be very little variation in the thickness of the material from the original thickness T. This point is important, because the thickness of the material in the finished container from the clamped region 58 progressively decreases towards the edge defined by the diameter 60, and if the clamping 58 were too close to the said edge 50, then the material of the container flange would be unacceptably thick.

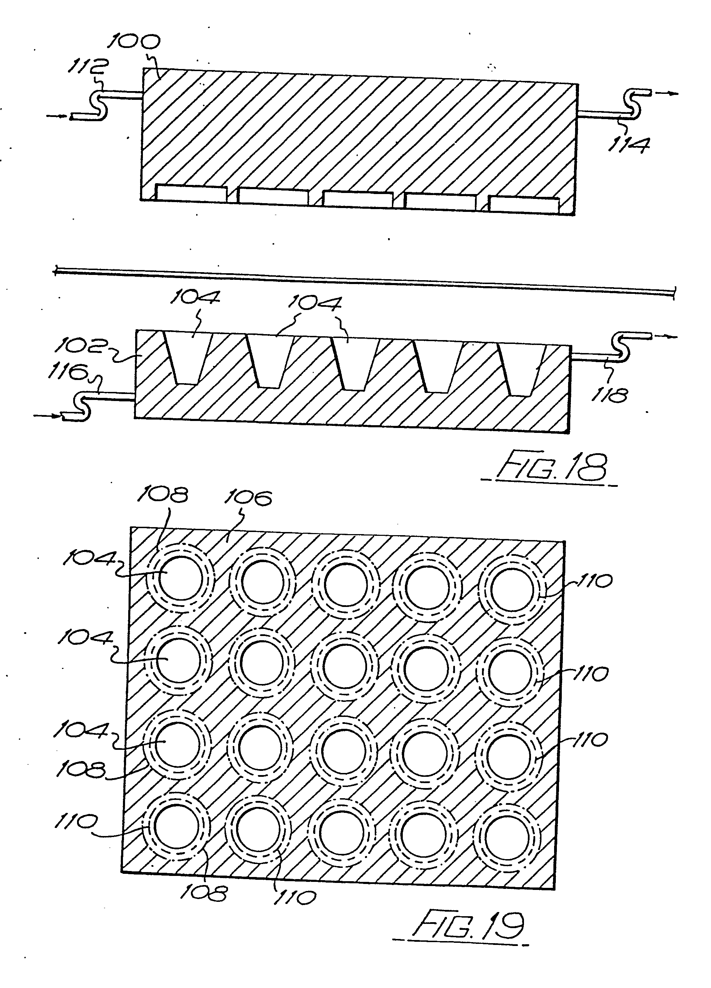

In the first stage of operation, compressed air is introduced into the mould cavity 54 through the passage 64, and the clamped and heated sheet material within annulus 58 is blown upwardly onto the plug 62, and distorts as shown in Fig. 10. In the next stage of operation, the plug 62 is moved downward progressively as shown in Figs. 11 and 12. During this time, the plug 62 is progressively stretching the material from the clamped region 58 and from the clamped region 58 to the point where the material makes contact with the plug, the material is being radially orientated. Fig. 13 shows the final position, and in this position the material has been thinned down and radially orientated in the region of the flange 14 such that the material thickness is somewhere in the region of .3 to .4 of the original thickness T. To ensure that the plastic material is shaped accurately to the mould cavity 54, after the initial supply of compressed air through passage 64, this is replaced by the connection of the passage to a source of vacuum so that the plastic material will be drawn onto the mould as shown in Fig. 13.

It is preferred to control the temperature of the mould, by passing water through passages therein, and by controlling the temperature of that water. In order to further assist the application of the material to the shape of the mould cavity 54, it is possible to introduce air under pressure through the ring 56 as shown by the arrow 68 in Fig. 12. The residual material which is left over after the formation and removal of a plurlity of containers can be recycled in an extrusion machine which produces the web material.

In the arrangement shown in Figs. 14 to 17 the mould 52 is slightly modified in the top region. In the arrangement in Figs. 10 to 13, the flange of the container and the clamped annular region 58 will lie approximately in the same radial plane. In the arrangement of Figs. 14 to 17 however, the clamped region 58 is displaced axially upwards from the flange 14, as well as radially outwards. In fact as will be clear from the description which follows, the clamped annular region 58 could be displaced further axially from the flange 14 than as shown in Figs. 14 to 17, yet the inner diameter of the clamped portion 58 could be more or less equal to the outer diameter of the flange portion 14 as defined by the diameter 66, (Fig. 17) being the position at which the container is severed from the remainder of the sheet material.

By so axially spacing the clamping region 58, there is defined a shoulder 70 into which the material 50 must eventually be deformed. This deformation into the shoulder 70, in fact provides an enhancement to the radial orientation, because the material first of all lies in the nature of an hypotenuse across the shoulder, as indicated in Fig. 16, and then is blown or drawn into the to reach the position shown in Fig. 17, during which blowing or drawing the material has been subjected to stretching and radial orientation. The Figs. 14, 15, 16 and 17 are to some extent self-explanatory, but it might be mentioned that as the plug 62 moves downwards, for example to the position shown in Fig. 15, the passage 64 is in fact connected to atmosphere, and at the bottom of the stroke of the plug 62 as shown in Fig. 16, the air under pressure is introduced as indicated by arrow 68 in Fig. 16 through the ring 56 to blow the material to the final form shown in Fig. 17 and also to deform the material into the said shoulder 70, effecting the said radial orientation as discussed herein. Of course, during the movement of the plug 62 as indicated in Figs. 15 and 16, the material is constantly being thinned down from the clamped region 58 to such an extent that the material has the thicknesses in the various regions as indicated in Fig. 17. It is noticed that the thickness of the flange 14 is of the order of 0.3 of the original thickness.

By so arranging for the flange to be radially orientated, it will then yield in concert with the metal lid rim as the two are being rim rolled together, and we have found that splitting and fracturing of the plastic in the region of the seam has been considerably reduced or completely mitigated, and extremely good results have been achieved.

The invention enables the achievment in thermoforming, with a suitable clamping arrangement, of said radial orientation to enable the containers to be rim rolled with metal lids, and this compares favourably with the steps which have had to be taken by Phillips in his U.S. Patent 3,685,685 of squeezing the plastic material to half thickness, and Woodley in his U.S. patent 4,102,467 where he requires a specific design of flange.

The spacing between the clamping region 58 and the line of cut 66 plays a significant part in this invention, and an optimum range has been identified in that, considering the arrangement in Fig. 10, the inner radius R of the clamped region 58 should be 1.2 to 1.8 times the radius of cut r. This means that the distance x in Fig. 10 should be 0.2 to 0.8 times the radius of cut r. This distance should desirably be consistant regardless of whether or not the spacing x lies purely radially as shown in Fig. 10, or in fact lies at an angle as shown in Fig. 17, or indeed is purely axial.

Although the containers according to the invention are specially produced for being rim rolled with metal lids, they can also be sealed by plastics lids which are capable of being so sealed to the containers to form an effective seal therewith.

CLAIMS

1. A method of producing a plurality of thermoformed, circular sectioned and flanged top containers, from thermoformable polyester plastics material in sheet form which is sufficiently hot to be thermoformed by moulding in a moulding apparatus having a plurality of circular sectioned, mould cavities, wherein:

a) the heat is removed from the plastics sheet material inplurality of annular regions to such an extent to freeze the said annular regions to a temperature below the thermoforming temperature, leaving discrete circular regions of hot plastics material to be thermoformed into individual containers;

b) locating said circular regions in register with said circular sectioned cavities and thermoforming the containers in said cavities and the flanges at the top edges of the cavities from said circular regions;

c) locating the edges of said circular regions spaced from the top edges of the said cavities to ensure that in the vicinity of said top edges, the plastics sheet material which forms said flanges is radially orientated and reduced in thickness as the said regions are thermoformed to define the containers and flanges; and

d) severing the containers from the remainder of the sheet along circular cut lines defining the edges of said flanges.

2. A method according to claim 1, wherein a plurality of containers are formed simultaneously in mould cavities arranged in a predetermined array and the heat is removed from said annular regions so that the circular regions lie in an array corresponding to said predetermined array.

3. A method according to claim 1, wherein the containers are formed sequentially and the mould cavities are arranged on a rotary assembly which rotates as the sheet in the form of the web is fed thereto.

4. A method according to Claim 2, wherein the heat is removed from the plastics material in a skeletal region including said annular regions by clamping said skeletal region by means of a relatively cool mould plate whilst the sheet is located over said mould cavities.

5. A method according to claim 4, including cooling the said mould plate by circulating cooling fluid through cooling passages therin.

6. A method according to claims 4 or 5 wherein the sheet remains clamped by said mould plate whilst the containers are formed therein.

7. A method according to claim 1, wherein the heat is removed from said skeletal region before the sheet is placed over the mould cavities.

8. A method according to any preceding claim, wherein the distance between the circular cut line and the inner diameter of the annular region is 0.2 to 0.8 of the radius of the circular cut line.

9. A method according to any preceding claim wherein the annular regions lie in the same plane as that in which the said flanges lie when the containers are formed in the mould cavities.

10. A method according to any of claims 1 to 8, wherein the annular regions are spaced axially and radially of the parts of the mould which define the said flanges when the containers are formed in the mould cavities.

11. A method according to claim 10 wherein there is an annular shoulder between each annular region and the flange defining region into which the material is deflected in order to effect stretching thereof and hence the said thinning and radial orientation.

12. A method according to any preceding claim, wherein the sheet material in the regions which define the flanges when the material is shaped in the mould cavities, is thinned down to a thickness in the range 0.3 to 0.4 of the originl thickness.

13. A method according to any preceding claim, wherein the plastics material comprises high viscosity, high molecular weight polyester having an average molecular weight in the range 24,000 to 42,500.

14. A method according to any preceding claim wherein the polyester sheet material is polyethylene terepthalate.

15. Plastics container when produced by the method of any one of the preceding claims.

16. Plastics containers according to claim 15 when filled with carbonated beverage and sealed by metal lids rim rolled to the container flanges.

0038371

1/11

FIG.1

14
12
10
16
18

FIG.2

FIG.3

18
A
22
A

FIG.4

20
18

FIG.5

FIG.6

FIG.7

FIG.8

FIG.9

3/11

*FIG.10*

56

62

50

66

60

66

T

58

58

X

Y

R

52

54

64

4/11

_FIG.11_

62

64

5/11

_FIG.12_

68

56

64

6/11

_FIG.13_

14

7/11

_FIG.14_

50

58

70

52

_FIG.15_

70

58

70

62

64

9/11

FIG.16

68

62

10/11

_FIG.17_

14

58

x

66

_FIG. 18_

_FIG. 19_